# EUROPÄISCHE PATENTSCHRIFT

(11) **EP 3 431 214 B1**
(45) Veröffentlichungstag und Bekanntmachung des Hinweises auf die Patenterteilung: **20.11.2019**
(21) Anmeldenummer: 18178692.2
(22) Anmeldetag: 20.06.2018
(51) Int. Cl.: B23K 9/09, B23K 9/10, B23K 9/12, B23K 9/173

(54) **LICHTBOGENSCHWEISSVERFAHREN UND -ANLAGE MIT EINER IMPULSLICHTBOGEN-BETRIEBSPHASE UND EINER KURZLICHTBOGEN-BETRIEBSPHASE IN ALTERNIERENDER ABFOLGE**
ARC WELDING METHOD AND APPARATUS WITH A PULSE ARC OPERATING PHASE AND A SHORT ARC OPERATING PHASE IN ALTERNATING SEQUENCE
PROCÉDÉ DE SOUDAGE À L'ARC ET INSTALLATION AYANT UNE PHASE DE FONCTIONNEMENT À ARC PULSÉ ET UNE PHASE DE FONCTIONNEMENT À ARC COURT À SÉQUENCE ALTERNÉE

(30) Priorität: 21.06.2017 DE 102017113620
(43) Veröffentlichungstag der Anmeldung: 23.01.2019
(73) Patentinhaber: Carl Cloos Schweißtechnik Gesellschaft mit beschränkter Haftung, 35708 Haiger (DE)
(72) Erfinder: Friedrich, Frank, 35630 Ehringshausen (DE); Warmbier, Andreas, 35708 Haiger (DE); Schmidt, Klaus-Peter, 57584 Scheuerfeld (DE); Dang, Hong Thanh, 35745 Herborn-Hörbach (DE)
(74) Vertreter: Lippert Stachow Patentanwälte Rechtsanwälte

(56) Entgegenhaltungen:
- EP-B1- 2 338 628
- EP-B1- 2 546 017
- WO-A1-2010/144931

## Beschreibung

Die Erfindung betrifft ein Verfahren zum Schutzgas-Lichtbogenschweißen mit abschmelzender Elektrode, bei dem Elektrodenmaterial an ein Schmelzbad übergeben wird, und in einer Impulslichtbogen-Betriebsphase, umfassend eine Grundstromphase und eine Impulsstromphase, eine Tropfenablöse erfolgt, wenn die Elektrode vom Schmelzbad beabstandet ist, und in einer Kurzlichtbogen-Betriebsphase eine kurzschlussbehaftete Tropfenablöse erfolgt, wobei zwischen Impulslichtbogen-Betriebsphase und Kurzlichtbogen-Betriebsphase wechselweise umgeschaltet wird, und sowohl in der Grundstromphase als auch in der Impulsstromphase der Impulslichtbogen-Betriebsphase die Elektrode in Richtung zum Schmelzbad und in der Kurzlichtbogen-Betriebsphase der Draht alternierend in Richtung zum und weg vom Schmelzbad gefördert wird. Die Erfindung betrifft ferner eine Schutzgas-Lichtbogen-Schweißvorrichtung zur Durchführung eines solchen Verfahrens.

Schutzgas-Lichtbogen-Schweißverfahren umfassen sowohl MIG-(Metall-Inertgas) als auch MAG-(Metall-Aktivgas) Schweißverfahren. Durch die Kombination der beiden grundsätzlich unterschiedlichen Schweißprozesse Impulslichtbogen-Schweißen und Kurzlichtbogen-Schweißen, die sich insbesondere in Bezug auf die an das Werkstück und/oder den Schweißdraht abgegebene Energie stark unterscheiden können, kann eine Anpassung des Schweißprozesses an die jeweilige Schweißsituation durchgeführt werden. Im Falle des herkömmlichen Kurzlichtbogenprozess wird bei vorwärtsbewegtem Schweißdraht und brennendem Lichtbogen an der Schweißdrahtspitze Material angeschmolzen, bis der Schweißdraht in das Schmelzbad eintaucht. Zur Auflösung des Kurzschlusses und zur Tropfenablöse wird der Draht dann bis zum Erreichen einer vorgegebenen Lichtbogenspannung zurückgezogen, und nachfolgend zur Wiederholung des Zyklus wieder nach vorne in Richtung zum Schmelzbad gefördert. Der Kurzlichtbogenprozess ist ein vergleichsweise kalter Prozess, der sich insbesondere für die Schweißung bzw. Fügung wärmeempfindlicher Materialien eignet.

Demgegenüber ist der Impulslichtbogen-Schweißprozess mit einem weit höheren Wärmeeintrag verbunden, bei dem unter fortwährender Förderung des Schweißdrahtes in Richtung zum Schmelzbad in einer Impulsstromphase mit einem pulsförmigen Verlauf des Stromes Material an der Spitze des Drahtes angeschmolzen und als Tropfen vom Draht abgelöst wird, der dann in das Schmelzbad fällt, da der Tropfenübergang beim Impulslichtbogen-Schweißprozess unter Beabstandung von Schweißdraht und Schmelzbad erfolgt. Die Ablösung des Tropfens vom Draht wird durch eine Wechselwirkung des Stromflusses mit dem hierdurch verursachten Magnetfeld unterstützt, wodurch über die Lorenzkraft eine Einschnürung des Drahtmaterials im aufgeschmolzenen Bereich und damit eine Ablösung eines Tropfens bewirkt wird. Nach der Stromimpulsphase des Impulslichtbogen-Prozesses schließt sich eine Grundstromphase bei weiter brennendem Lichtbogen an, um eine Anschmelzung an der Schweißdrahtspitze zu verursachen zur Vorbereitung der nachfolgenden Impulsstromphase zur Ablösung des nächsten Tropfens.

Bei dem beschriebenen kombinierten Schweißverfahren kann somit durch das wechselweise Anwenden von Impulslichtbogen-Betriebsphasen und Kurzlichtbogen-Betriebsphasen der Gesamtprozess insbesondere in Bezug auf den Wärmeeintrag eingestellt bzw. variiert werden, was in bestimmten Anwendungssituationen besonders zweckmäßig ist.

Ein wesentlicher Aspekt bei der Nutzung der angegebenen zwei unterschiedlichen Schweißprozesse ist die Einrichtung des zeitlichen Übergangs von einem Prozess in den anderen, insbesondere in solchen Fällen, in welchen jeweils nur wenige Zyklen von einem der beiden Schweißprozesse durchgeführt wird, bevor wieder in die andere Betriebsphase umgeschaltet wird.

Ein gattungsbildendes Schweißverfahren ist beispielsweise in der Patentschrift EP 1 677 940 B1 oder in der Patentschrift EP 2 338 628 B1 offenbart. Zur Synchronisierung der beiden Betriebsphasen wird gelehrt, den Kurzlichtbogen-Prozess in der Grundstromphase des Impulslichtbogen-Prozesses durchzuführen, während welcher der Schweißstrom auf einen Grundwert zur Erhaltung des Lichtbogens abgesenkt wird.

Der Erfindung liegt die Aufgabe zugrunde, das gattungsbildende Verfahren zum Schutzgas-Lichtbogenschweißen so weiterzubilden, dass ein störungsfreier Übergang zwischen den beiden Betriebsmodi bzw. -phasen innerhalb des kombinierten Schweißverfahrens bereitgestellt werden kann, um eine höhere Flexibilität bei der Ausführung des Verfahrens sowie eine Verbesserung der Güte der jeweiligen Schweißnaht aufgrund eines kontinuierlicheren bzw. schnelleren Übergangs zwischen den beiden Betriebsphasen zu ermöglichen.

Die Aufgabe löst die Erfindung verfahrensseitig mit einem Verfahren zum Schutzgas-Lichtbogenschweißen mit abschmelzender Elektrode mit den Merkmalen von Anspruch 1.

Das erfindungsgemäße Verfahren zeichnet sich dadurch aus, dass zum Umschalten von der Impulslichtbogen-Betriebsphase in die Kurzlichtbogen-Betriebsphase nach Ablauf der Impulsstromphase eine erste Übergangphase mit vorzugsweise zur Grundstromphase erhöhtem Energieeintrag in die Drahtelektrode über eine erste vorbestimmte Zeitdauer erfolgt, an die sich eine Löschphase anschließt, in welcher zunächst der Lichtbogen gelöscht wird, während die Drahtelektrode in Richtung zum Schmelzbad bewegt wird, und die Drahtelektrode bei gelöschtem Lichtbogen bis zum Kontakt mit dem Schmelzbad gefördert wird.

Es hat sich herausgestellt, dass zur Erzielung eines kontinuierlicheren und störungsfreieren Übergang zwischen den beiden Betriebsphasen bzw. Modi bei der Umschaltung von der Impulslichtbogen-Betriebsphase in die Kurzlichtbogen-Betriebsphase im Anschluss an die Impulsstromphase der Impulslichtbogen-Betriebsphase eine erste Übergangsphase vorgesehen werden sollte, bei welcher der Lichtbogen brennt mit einem vorzugsweise zur Grundstromphase erhöhten Energieeintrag in die Drahtelektrode über eine vorbestimmte erste Zeitdauer, die spätestens kurz vor Beginn der Übergangsphase, d.h. kurz vor Ende der Impulsstromphase auf der Grundlage erfasster aktueller Schweißparameter vorbestimmt und festgelegt werden kann. Dabei kann neben der vorbestimmten Zeit auch der jeweilige Energieeintrag, insbesondere der Schweißstrom bzw. der Verlauf des Schweißstromes innerhalb der Übergangsphase in ähnlicher Weise wie deren vorbestimmte Zeitdauer ermittelt und angepasst werden, sodass ein optimaler Übergang auf den Kurzlichtbogen-Schweißprozess erfolgen kann. Dabei hat sich im Zusammenhang mit dem Vorsehen dieser ersten Übergangsphase ferner herausgestellt, dass bei der Umschaltung in eine Kurzlichtbogen-Betriebsphase nach Ablauf der ersten Übergangsphase zunächst der Lichtbogen gelöscht werden sollte, d.h. eine Stromunterbrechung bei einer Beabstandung zwischen Elektrode und Schmelzbad erfolgen sollte, während die Drahtelektrode weiter in Richtung zum Schmelzbad bewegt wird, sodass die Drahtelektrode bei gelöschtem Lichtbogen bis zum Kontakt mit dem Schmelzbad gefördert wird. Die Abfolge der beschriebenen Übergangsphase sowie der Löschung des Lichtbogens in einer sich anschließenden Löschphase bevor der Draht das Schmelzbad erreicht, kann sicherstellen, dass zum Zeitpunkt des Kurzschlusses bzw. der nachfolgenden Auflösung des Kurzschlusses immer die gleichen Prozessverhältnisse vorliegen. Es sei darauf hingewiesen, dass die vorbestimmten Zeitdauer und/oder der jeweilige Energieeintrag für die erste Übergangsphase in einer Ausführungsform nicht während der Ausführung des Schweißprozesses, sondern vor dessen Start festgelegt sein können, was sich in vielen Anwendungen als ausreichend herausgestellt hat.

Durch das Verbinden der ersten Übergangsphase mit der angegebenen Löschphase kann beim Umschalten in die Kurzlichtbogen-Betriebsphase im Vergleich zum Stand der Technik eine stärkere Änderung des Energieeintrages in den Schweißprozess erzielt werden, was auch eine schnellere Reaktion auf inhärente oder externe Störprozesse auf den Schweißprozess ermöglicht. Darüber hinaus kann durch das Vorsehen der Löschphase vor dem Kurzschluss der nachfolgende Aufbau des Lichtbogens bei der Kurzschlussauflösung bzw. Tropfenablöse schneller und mit höherer Zuverlässigkeit erreicht werden, was die Stabilität des erfindungsgemäßen Verfahrens weiter erhöht. Dadurch, dass eine insbesondere einstellbare Abkühlung in der angegebenen Löschphase durch Einstellen der Zeitdauer dieser Phase bereitgestellt werden kann, ist es möglich, die Dauer des Kurzschlusses zu verringern und damit einen störungsfreieren Aufbau des Lichtbogens nach der Kurzschlussauflösung bereitzustellen.

Weitere Ausführungen und Merkmale der Erfindung sind in der allgemeinen Beschreibung, den Figuren, der Figurenbeschreibung sowie den Unteransprüchen angegeben.

In einer Ausführungsform der Erfindung kann vorgesehen sein, die sich an die erste Übergangsphase zum Umschalten von der Impulslichtbogen-Betriebsphase in die Kurzlichtbogen-Betriebsphase anschließende Löschphase, in welcher die Drahtelektrode mit gelöschtem Lichtbogen in Richtung zum Schmelzbad bewegt wird, nicht nur beim Umschalten der Impulslichtbogen-Betriebsphase in die Kurzlichtbogen-Betriebsphase durchzuführen, sondern diese Löschphase grundsätzlich als Teilphase des Kurzlichtbogen-Prozesszyklus bzw. der Kurzlichtbogenperiode ablaufen zu lassen, sodass mehrere, innerhalb einer Kurzlichtbogen-Betriebsphase angeordnete Kurzlichtbogen-Prozesszyklen bzw. Perioden jeweils als Teil des jeweiligen Zyklus die angegebene Löschphase aufweisen. Durch diese Maßnahme kann die Stabilität des Gesamtprozesses und darüber hinaus die Flexibilität bezüglich der Einstellbarkeit des Wärmeeintrags in den Gesamtschweißprozess weiter erhöht werden.

Zweckmäßigerweise kann nach Ausbildung des Kontaktes der Drahtelektrode mit dem Schmelzbad in der Kurzlichtbogen-Betriebsphase die Drahtförderung zur Tropfenablösung umgekehrt werden zum Auflösung des Kurzschlusses unter Wiederzünden des Lichtbogens bis ein vorgegebener Prozessparameter wie eine vorgegebene Lichtbogenlänge bzw. eine vorgegebene Lichtbogenspannung erreicht wird und anschließend bei Aufrechterhaltung des Lichtbogens die Drahtförderung wieder umgekehrt werden. Während die Lichtbogenspannung als Kriterium zur Umkehrung der Drahtförderung direkt gemessen werden kann, kann die Lichtbogenlänge beispielsweise mittels der Steuerung des Drahtantriebs ermittelt bzw. erfasst werden, insbesondere über Motor-Encoder-Signale, die vom Drahtantriebsmotor abgegeben werden können.

Um ausgehend von der Kurzlichtbogen-Betriebsphase in eine Impulslichtbogen-Betriebsphase umzuschalten, kann zweckmäßigerweise auch eine zusätzliche Phase, eine zweite Übergangsphase, vorgesehen sein. Diese zweite Übergangsphase kann sich zu einem Zeitpunkt innerhalb der Kurzlichtbogen-Betriebsphase anschließen, an dem bei Aufrechterhaltung des Lichtbogens die Drahtförderung wieder umgekehrt wird, sodass die Drahtelektrode wieder in Richtung auf das Schmelzbad geführt wird. Diese zweite Übergangsphase kann dadurch gekennzeichnet sein, dass sie bei aufrecht erhaltendem Lichtbogen mit einem zur Grundstromphase des Impulslichtbogen-Schweißprozesses etwa gleichen, bzw. identischen Energieeintrag in die Drahtelektrode erfolgt über eine vorbestimmte Zeitdauer, an die sich dann die Impulslichtbogen-Betriebsphase anschließen kann, die bei dem erfindungsgemäßen Verfahren mit einem Stromimpuls, d.h. mit einer Impulsstromphase starten kann.

Vorzugsweise können die jeweiligen Schweißparameter wie Schweißstrom, dessen Verlauf und/oder Zeitdauer für die zweite Übergangsphase in ähnlicher Weise wie bei der ersten Übergangsphase auf der Grundlage vorher erfasster Schweißprozessparameter festgelegt und eingestellt werden, um einen möglichst störungsfreien Übergang von der Kurzlichtbogen-Betriebsphase in die Impulslichtbogen-Betriebsphase durchzuführen. Je nach Ausführungsform kann dabei vorgesehen sein, in der zweiten Übergangsphase die Drahtelektrode positiv zu polen in gleicher Weise wie in der Impulsstromphase der Impulslichtbogen-Betriebsphase.

Zweckmäßigerweise kann in der Kurzlichtbogen-Betriebsphase des erfindungsgemäßen Schweißverfahrens vorgesehen sein, jeweils im Anschluss an die Drahtumkehrung zur Förderung des Drahtes wieder in Richtung zum Schmelzbad und vor dem Löschen des Lichtbogens einen im Vergleich zur Grundstromphase der Impulslichtbogen-Betriebsphase erhöhten Energieeintrag in die Schweißdrahtelektrode einzubringen. Dieser erhöhte Energieeintrag kann erfindungsgemäß beispielsweise durch einen Strompuls in den Schweißprozess eingeführt werden, der einen niedrigeren Amplitudenwert als der Strompuls der Strompulsphase aufweist, sodass kein Tropfen abgelöst wird. Der erhöhte Energieeintrag kann sich durch eine entsprechende Gestaltung des Stromverlaufs von dem Energieeintrag der ersten Übergangsphase unterscheiden, da die einzustellenden Schweißparameter, insbesondere der Schweißstrom, innerhalb der ersten Übergangsphase zur Anpassung der beiden unterschiedlichen Schweißprozess-Betriebsphasen gesteuert bzw. geregelt werden, während innerhalb der dann nachfolgenden Kurzlichtbogen-Betriebsphase ein anderer Energieeintrag vorgesehen werden kann bei der Durchführung eines jeweiligen Zyklus bzw. einer Periode innerhalb der Kurzlichtbogen-Betriebsphase. In der Regel kann in der Kurzlichtbogen-Betriebsphase dieser erhöhte Energieeintrag bei positiv gepolter Elektrode in den Schweißprozess vor dem Löschen des Lichtbogens eingebracht werden. Beispielsweise kann der erhöhte Energieeintrag in der Kurzlichtbogen-Betriebsphase im Anschluss an die Drahtförderumkehrung zur Förderung des Drahtes in Richtung zum Schweißbad und vor dem Löschen des Lichtbogens durch Regelung auf einen Konstantstrom erzeugt werden, der im Anschluss an die Drahtförderumkehrung und gegebenenfalls unter Vorsehen einer Totzeit vor dem Löschen des Lichtbogens über einen vorgegebenen Zeitraum geregelt wird. Die angegebene Totzeit kann dabei eine Zeitdauer darstellen, innerhalb dessen die Schweißparameter so eingestellt sind, dass ein Lichtbogen brennt, jedoch z.B. unter Einstellen bzw. Steuern eines Schweißstroms, der niedriger als der angegebene Konstantstrom zur Einbringung eines erhöhten Energieeintrags in den Draht ist.

In einer Ausführungsform kann vorgesehen sein, dass in der Impulslichtbogen-Betriebsphase des erfindungsgemäßen Verfahrens die Drahtelektrode sowohl in der Grundstromphase als auch in der Impulsstromphase positiv gepolt ist, wobei diese Polung während der gesamten Schweißbetriebsphase aufrechterhalten bleiben kann.

Darüber hinaus kann in einer anderen Ausführungsform auch vorgesehen sein, die Drahtelektrode in der Grundstromphase des Impulslichtbogen-Prozesses negativ zu polen, sodass beim Wechsel von Impulsstromphase zur Grundstromphase und umgekehrt jeweils ein Polaritätswechsel erfolgt. Da der Energieeintrag in die Drahtelektrode bei negativer Polung höher ist als bei positiv gepolter Drahtelektrode, kann in diesem Fall ein geringerer Schweißstrom eingestellt bzw. geregelt werden zur Einstellung des gleichen Energieeintrages im Vergleich zur Situation bei positiv gepolter Drahtelektrode oder ein höherer Energieeintrag bei gleichem Schweißstrom im Vergleich zur Situation mit positiv gepolter Drahtelektrode. Dabei muss zwischen diesen beiden Phasen der Impulslichtbogen-Betriebsphase eine jeweilige Umpolung des Drahtes und ein Wiederzünden des Lichtbogens zwischen Impulsstromphase und Grundstromphase durchgeführt werden. Eine solche Umpolung ermöglicht insbesondere eine genaue Steuerung der Verteilung des jeweiligen Wärmeeintrags in den Draht und in das Werkstück bzw. das Schmelzbad. Insbesondere die Umpolung des Drahtes von der Grundstromphase bei negativ gepoltem Schweißdraht und Wiederzünden des Lichtbogens in der Pulsstromphase kann zweckmäßigerweise mittels einer bekannten Zündhilfeschaltung unterstützt werden.

Es hat sich als zweckmäßig herausgestellt, bei der Umschaltung von der Impulslichtbogen-Schweißbetriebsphase in die Kurzlichtbogen-Schweißbetriebsphase den Energieeintrag in den Schweißdraht in der ersten Übergangphase im Vergleich zum Energieeintrag in der Grundstromphase zu erhöhen, um eine erhöhte Anschmelzung von Material der Drahtelektrode zu erzielen. Hierzu kann vorgesehen sein, den Schweißstrom in der Übergangsphase, in welcher der Lichtbogen brennt, und ausgehend vom Wert des Schweißstromes in der Grundstromphase der vorhergehenden Impulslichtbogen-Betriebsphase kontinuierlich, z.B. rampenförmig zu erhöhen innerhalb der vorgegebenen Zeitdauer der Übergangsphase. Zu Beginn der dann nachfolgenden Löschphase wird der sich am Ende der ersten Übergangsphase einstellende Schweißstrom abgeschaltet. In einer anderen Ausführungsform kann auch vorgesehen sein, in der Übergangsphase einen im Vergleich zur Grundstromphase erhöhten und konstanten Energieeintrag bzw. Strom mit erhöhtem Grundpegel einzustellen, wobei sicherzustellen ist, dass der Energieeintrag in dieser Phase niedriger ist als in der Impulsstromphase der Impulslichtbogen-Schweißbetriebsphase zur Vermeidung einer Tropfenablöse bei beabstandeter Drahtelektrode zum Schmelzbad.

Grundsätzlich kann der Schweißdraht in der ersten Übergangsphase, in welcher ein Lichtbogen zwischen Schweißdraht und Werkstück brennt, positiv gepolt sein. Dies trifft insbesondere bei solchen erfindungsgemäßen Schweißverfahren zu, bei welchen in der jeweiligen Impulslichtbogen-Betriebsphase sowohl in der Impulsstromphase als auch in der Grundstromphase der Schweißdraht positiv gepolt ist.

Wie obenstehend erläutert, kann bei dem erfindungsgemäßen Schweißverfahren die jeweilige Impulslichtbogen-Betriebsphase auch so ausgeführt sein, dass in der Impulsstromphase der Schweißdraht positiv und in der Grundstromphase der Schweißdraht negativ gepolt ist. In diesem Fall kann die Drahtelektrode in der ersten Übergangsphase vorzugsweise wie in der Grundstromphase der jeweiligen Impulslichtbogen-Betriebsphase negativ gepolt sein. Jedoch ist es auch möglich, dass die Drahtelektrode in der ersten Übergangsphase negativ gepolt ist, also in diesem Fall entgegengesetzt zur Polung in der Grundstromphase der jeweiligen Impulslichtbogen-Betriebsphase.

Um einen störungsfreien Übergang von der Impulslichtbogen-Betriebsphase in die Kurzlichtbogen-Betriebsphase bereitzustellen, kann vorzugsweise vorgesehen sein, dass nach dem Löschen des Lichtbogens die Drahtelektrode bis zum Kontakt mit dem Schmelzbad im Vergleich zur Fördergeschwindigkeit in der Impulslichtbogen-Betriebsphase mit einer erhöhten Geschwindigkeit gefördert wird, sodass auch die Zeitdauer des Kurzschlusses zwischen Drahtelektrode und Schmelzbad vermindert werden kann. Durch Einstellen der Drahtfördergeschwindigkeit kann insofern die Zeitdauer der Löschphase und damit der Abkühlung im Schmelzbad beeinflusst bzw. eingestellt werden.

Zum Löschen des Lichtbogens für die Umschaltung von der Impulslichtbogen-Betriebsphase in die Kurzlichtbogen-Betriebsphase bzw. zum Löschen des Lichtbogens innerhalb einer jeden Periode der Kurzlichtbogen-Betriebsphase kann die Schweißspannung ausgeschaltet werden zur Unterbrechung des Stromflusses über den Lichtbogen und damit zum Löschen desselben. Um nach dem Löschen des Lichtbogens das Einstellen des Kurzschlusses durch Eintauchen der Drahtelektrode in das Schweißbad zu erkennen, kann zweckmäßigerweise vorgesehen sein, dass im Anschluss an das Löschen des Lichtbogens nach einer vorgegebenen Zeitdauer, die sicherstellt, dass der Lichtbogen tatsächlich erlöscht, und vor Erreichen des Kontaktes der Drahtelektrode mit dem Schweißbad eine vorgegebene Schweißleerlaufspannung eingestellt wird, die es ermöglicht, aufgrund des durch den Kurzschluss verursachten Stromfluss den Kontakt der Drahtelektrode mit dem Schweißbad zu erkennen und die nachfolgenden Prozessphasen zu steuern.

Grundsätzlich kann für die Steuerung des erfindungsgemäßen Verfahrens in allen Prozessphasen, insbesondere in allen Prozessphasen der Kurzlichtbogen-Betriebsphase als auch in allen Prozessphasen der Impulslichtbogen-Betriebsphase eine Schweißstromregelung durchgeführt werden. Es liegt jedoch auch im Rahmen der Erfindung, zumindest in einigen dieser Prozessphasen eine Regelung der Schweißspannung durchzuführen.

Die Erfindung betrifft ferner eine Vorrichtung zum Schutzgas-Lichtbogenschweißen mit abschmelzender Drahtelektrode, mit einer den Schweißprozess speisenden Stromquelle sowie einer Drahtfördereinrichtung, welche beide derart steuerbar sind, dass in einer Impulslichtbogen-Schweißbetriebsphase, umfassend eine Grundstromphase und eine Impulsstromphase, eine Tropfenablöse erfolgt, wenn die Elektrode vom Schmelzbad beabstandet ist und in einer Kurzlichtbogen-Betriebsphase eine kurzschlussbehaftete Tropfenablöse erfolgt, wobei zwischen Impulslichtbogen-Betriebsphase und Kurzlichtbogen-Betriebsphase wechselweise umgeschaltet wird, und sowohl in der Grundstromphase als auch in der Impulsstromphase der Impulslichtbogen-Betriebsphase die Drahtelektrode in Richtung zum Schmelzbad und in der Kurzlichtbogen-Schweißbetriebsphase der Draht wechselweise in Richtung zum und weg vom Schmelzbad gefördert wird. Die erfindungsgemäße Vorrichtung zum Schutzgaslichtbogenschweißen zeichnet sich dadurch aus, dass die Stromquelle und die Drahtfördereinrichtung so steuerbar sind, dass zum Umschalten von der Impulslichtbogen-Betriebsphase in die Kurzlichtbogen-Betriebsphase nach Ablauf der Impulsstromphase eine erste Übergangphase mit vorzugsweise zur Grundstromphase erhöhtem Energieeintrag in die Drahtelektrode über eine erste vorbestimmte Zeitdauer erfolgt, an die sich eine Löschphase anschließt, in welcher zunächst der Lichtbogen gelöscht wird, während die Drahtelektrode in Richtung zum Schmelzbad bewegt wird, und die Drahtelektrode bei gelöschtem Lichtbogen bis zum Kontakt mit dem Schmelzbad gefördert wird.

Die Erfindung wird im Folgenden durch das Beschreiben einiger Ausführungsformen unter Bezugnahme auf die beiliegenden Zeichnungen erläutert, wobei
- Figur 1: in einer Prinzipskizze eine erfindungsgemäß ausgebildete Vorrichtung zur Durchführung eines erfindungsgemäßen Verfahrens zum Schutzgas-Lichtbogenschweißen,
- Figur 2: den zeitlichen Ablauf der Schweißparameter Schweißspannung, Schweißstrom und Drahtgeschwindigkeit für ein erfindungsgemäßes Verfahren zum Schutzgas-Lichtbogenschweißen einer ersten Ausführungsform,
- Figur 3: den zeitlichen Verlauf der Schweißparameter Schweißspannung, Schweißstrom und Drahtgeschwindigkeit für ein erfindungsgemäßes Verfahren zum Lichtbogenschweißen einer Variante der ersten Ausführungsform gemäß Figur 2,
- Figur 4: den zeitlichen Ablauf der Schweißparameter Schweißspannung, Schweißstrom und Drahtgeschwindigkeit für ein erfindungsgemäßes Verfahren zum Lichtbogenschweißen einer zweiten Ausführungsform,
- Figur 5: den zeitlichen Verlauf der Schweißparameter Schweißspannung, Schweißstrom und Drahtgeschwindigkeit für ein erfindungsgemäßes Verfahren zum Lichtbogenschweißen einer Variante der zweiten Ausführungsform gemäß Figur 4,
- Figur 6: den zeitlichen Verlauf der Schweißparameter Schweißspannung, Schweißstrom und Drahtgeschwindigkeit für ein erfindungsgemäßes Verfahren zum Lichtbogenschweißen nach einer dritten Ausführungsform, und
- Figur 7: den zeitlichen Ablauf der Schweißparameter Schweißspannung, Schweißstrom und Drahtgeschwindigkeit für ein erfindungsgemäßes Verfahren zum Lichtbogenschweißen einer Variante der dritten Ausführungsform gemäß Figur 6
zeigt.

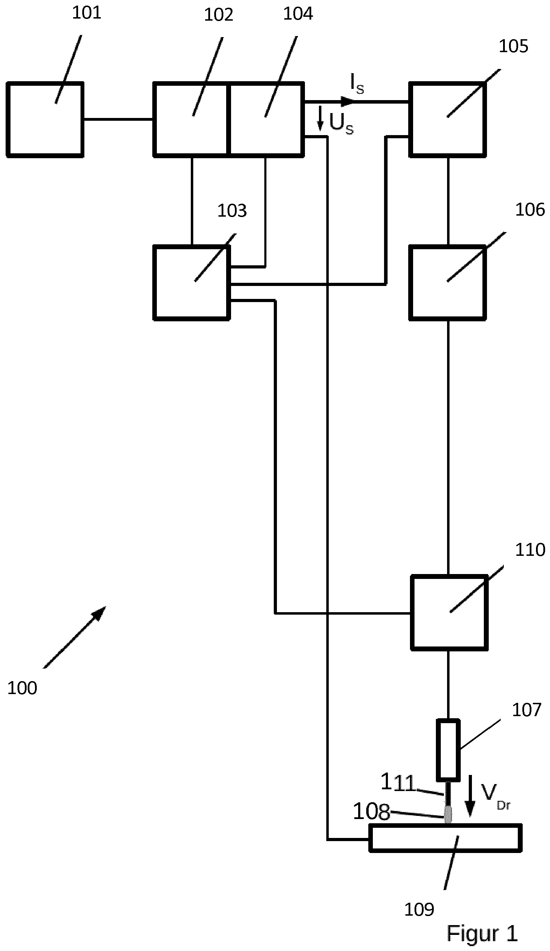

Figur 1 ist ein Blockschaltbild eines Schweißgeräts 100, das zur Ausführung eines erfindungsgemäßen Verfahrens zum Schutzgas-Lichtbogenschweißen ausgebildet ist. Dabei umfasst das Schweißgerät 100 eine Schweißstromquelle 102, die von einem Drehstromnetz 111 gespeist ist. Der Schweißstromquelle nachgeschaltet ist eine je nach Ausführungsform des erfindungsgemäßen Verfahrens aktiv oder passiv schaltbare Polwechseleinrichtung 104 zur Umkehrung der Polarität, an deren Ausgang die beiden Pole zur Speisung des Schweißprozesses am Werkstück 109 bereitgestellt sind. Der Ausgang der Polwechseleinrichtung 104 stellt somit die Schweißspannung U_{S} sowie den Schweißstrom IS bereit. Der Schweißstromkreis verläuft über eine Drahtfördereinrichtung 105, die an die Polwechseleinrichtung 104 angeschlossen ist und den Schweißdraht von einem hier nicht dargestellten Drahtvorrat wie einer Drahtspule fördert, einen Drahtpuffer, in welchem innerhalb der Drahtfördererstrecke transient befindlicher Drahtüberschuss gepuffert werden kann, sowie über eine zweite Drahtfördereinrichtung 110 zum Schweißbrenner 107, an welchem der Schweißdraht 111 zusammen mit anderen Betriebsmitteln wie ein Schutzgas austritt und dem Schweißprozess zugeführt wird. Das Werkstück 109 ist zum Schließen des Schweißstromkreises mit dem zweiten Leistungsausgang, d.h. dem zweiten Pol der Polwechseleinrichtung 104 verbunden, sodass sich über den Schweißprozess ein zwischen dem Schweißdraht 111 und dem Werkstück 109 brennender Lichtbogen 108 ausbilden kann. In der beschriebenen Ausführungsform des Schweißgeräts 100 steuert eine zentrale Steuereinrichtung 103 alle am Schweißprozess beteiligten Einrichtungen, d.h. die Schweißstromquelle 102, die Polwechseleinrichtung 104, die erste Drahtfördereinrichtung 105 sowie die zweite Drahtfördereinrichtung 110.

In einer Ausführungsform wird die Drahtfördereinrichtung 105 zum kontinuierlichen und gleichförmigen Fördern des Schweißdrahtes von dem Drahtvorrat in Richtung zum Brenner angesteuert, wobei die zweite Drahtfördereinrichtung 110 von der Steuereinrichtung 103 abhängig von der jeweiligen Prozessphase angesteuert werden kann, das Ende des Schweißdrahtes 111 vom Werkstück 109 zurückzuziehen, wobei ein jeweiliger Überschuss des Drahtes im hier passiv arbeitenden Drahtpuffer 106 zwischengespeichert werden kann. Die Steuereinrichtung 103 ist in nicht dargestellter Weise mit Messeinrichtungen bzw. Sensoren zur Erfassung von Schweißprozessparameter wie der Schweißspannung, des Schweißstroms sowie der Drahtgeschwindigkeit angeschlossen und steuert in Abhängigkeit des Ausgangs dieser Messeinrichtungen den gesamten Schweißprozess. Besonders vorteilhaft ist das Anordnen der entsprechender Messeinrichtungen zur Erfassung der jeweiligen Prozessparameter direkt am Ort des Schweißprozesses, was eine besonders genaue Steuerung des erfindungsgemäßen Verfahrens ermöglicht, beispielsweise die Messung der Lichtbogenspannung mittels einem Sensor, der die Spannung direkt zwischen der Spitze des Schweißdrahtes 111 und dem Werkstück 109 abgreift.

Das Schweißgerät 100 gemäß Figur 1 ist zur Durchführung eines Verfahrens zum Schutzgas-Lichtbogenschweißen mit abschmelzender Elektrode ausgebildet, bei welchem Elektrodenmaterial an ein Schmelzbad übergeben wird, wobei der Schweißprozess sich abwechselnde Impulslichtbogen-Betriebsphasen und Kurzlichtbogen-Betriebsphasen aufweist, zwischen welchen alternierend umgeschaltet wird, um einen möglichst kalten Schweißprozess bereitzustellen. Das erfindungsgemäße Verfahren eignet sich insbesondere zum Schweißen von dünnen Blechen, wobei die Abkühlphasen innerhalb des Gesamtprozesses genau gesteuert und bei Bedarf auch ein zum Kurzlichtbogen-Schweißprozess höherer Wärmeeintrag bereitgestellt werden kann. Dabei weist ein Impulslichtbogen-Schweißprozesszyklus jeweils eine Grundstromphase und eine Impulsstromphase auf, wobei sich in der Impulsstromphase aufgrund des Pinch-Effektes ein Tropfen von der Drahtelektrode ablöst, wenn die Elektrode vom Schmelzbad beabstandet ist. Dagegen wird bei der sich mit der beschriebenen Impulslichtbogen-Betriebsphase abwechselnden Kurzlichtbogen-Betriebsphase eine kurzschlussbehaftete Tropfenablöse durchgeführt, bei der der Schweißdraht bis zum Einstellen eines Kurzschlusses zwischen Schmelzbad und Drahtelektrode gefördert wird und danach zurückgezogen wird, um den Kurzschluss zu lösen und eine Tropfenablöse zu ermöglichen.

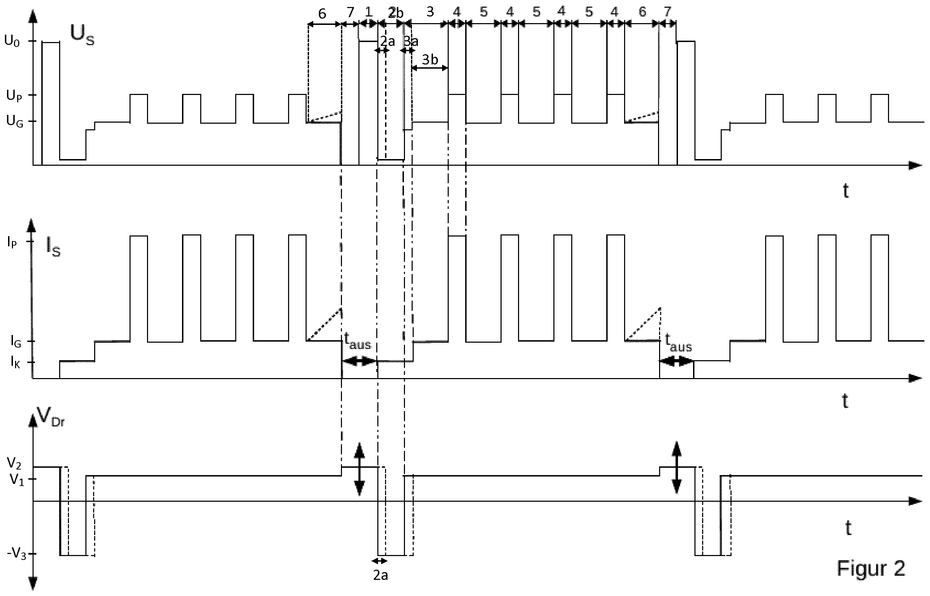

Figur 2 zeigt in einer ersten Ausführungsform des erfindungsgemäßen Verfahrens den Zeitverlauf der Schweißspannung Us, des Schweißstroms Is und der Drahtgeschwindigkeit VDr, wobei sich eine Impulslichtbogen-Betriebsphase, umfassend in der dargestellten Ausführungsform vier Zyklen bzw. Perioden mit jeweils einer Grundstromphase 5 und einer Impulsstromphase 4, mit einer Kurzlichtbogen-Betriebsphase abwechselt, die in der dargestellten Ausführungsform jeweils einen einzelnen Zyklus bzw. Periode aufweist. Typische Zeitdauern für eine einzelne Periode einer Kurzlichtbogen-Betriebsphase bzw. eine einzelne Periode einer Impulslichtbogen-Betriebsphase liegen im Bereich von etwa 10ms bis 100ms. Je nach spezifischer Anwendung können sie jedoch auch darüber oder darunter liegen.

Wesentlich für die Durchführung eines störungsfreien und flexibel einstellbaren Schweißprozess ist insbesondere die Gestaltung des Übergangs von der einen Betriebsphase in die andere, wobei zunächst der Übergang von der Impulslichtbogen-Betriebsphase in die Kurzlichtbogen Betriebsphase betrachtet werden soll. Der Beginn oder Start des erfindungsgemäßen Schweißverfahrens soll hier nicht betrachtet werden, da er nach herkömmlichen Verfahren ausgeführt werden kann, wie es z.B. für das Impulslichtbogen- oder das Kurzlichtbogenschweißen bekannt ist.

Nach Beendigung der letzten Stromimpulsphase 4 in der Abfolge der vier Stromimpulse schließt sich zur Einleitung des Übergangs in die Kurzlichtbogen-Betriebsphase eine Übergangsphase 6 an, in welcher der Schweißdraht an seiner Spitze aufgrund des Wärmeeintrags von dem sich zwischen Draht und Werkstück ausbildenden Lichtbogen angeschmolzen wird. Dabei kann sich diese Phase 6 in Bezug auf die Phasendauer von der Dauer der Grundstromphase 5 der Impulslichtbogen-Betriebsphase unterscheiden, z.B. länger oder kürzer sein. In der Ausführungsform gemäß Fig. 2 ist die Phasendauer identisch mit der Zeitdauer der Grundstromphase der Impulslichtbogen-Betriebsphase. Die Zeitdauer der ersten Übergangsphase kann zu Beginn des gesamten Schweißvorgangs festgelegt werden. Es ist jedoch auch möglich Schweißparameter in der ersten Übergangsphase 6 wie die Zeitdauer oder den Verlauf des Schweißstroms in der ersten Übergangsphase auf der Grundlage von jeweils kurz vor Beginn der jeweiligen ersten Übergangsphase 6 ermittelten bzw. gemessenen Prozessparameter zu bestimmen und festzulegen.

In der in Figur 2 angegebenen Ausführungsform ist der Energieeintrag in der Übergangsphase für die als durchgezogene Linien dargestellten Kurvenverläufe identisch zu dem in der Grundstromphase 5 der Impulslichtbogen-Betriebsphase eingestellt, d.h. Schweißstrom und Schweißspannung sind in der Übergangsphase identisch zu den Werten der Grundstromphase eingestellt bzw. gesteuert, hier konstant. Insofern wird in dieser Ausführungsform die erste Übergangsphase 6 zumindest in Bezug auf Zeitdauer, Strom- und Spannungsverlauf, Polung des Drahtes sowie Drahtgeschwindigkeit identisch zur Grundstromphase der Impulslichtbogen-Betriebsphase durchgeführt. In einer weiteren Ausführungsform kann auch vorgesehen sein, den Energieeintrag in den Schweißdraht in der ersten Übergangsphase 6 unterschiedlich zur Grundstromphase 5 der Impulslichtbogen-Betriebsphase zu steuern bzw. zu regeln worauf untenstehend näher eingegangen werden soll.

Nach Ablauf der ersten Übergangsphase 6 schließt sich über den Zeitraum taus eine Löschphase an, zu deren Beginn der Lichtbogen durch Abschalten des Ausgangs der Schweißquelle 2 bzw. der Polwechseleinrichtung 4 ausgeschaltet wird. In der in Fig. 2 angegebenen Ausführungsform wird die Drahtgeschwindigkeit ausgehend von der Drahtgeschwindigkeit V1 während der Löschphase auf den Wert V2 erhöht. Während der Draht weiter in Richtung Schmelzbad bewegt wird, sind sowohl der Schweißstrom als auch die Schweißspannung auf Null gelegt, wobei die Phase 7 eine endliche Zeitdauer beträgt, die sicherstellt, dass der Lichtbogen tatsächlich erloschen ist. Nach Ablauf der Phase 7 wird in der Phase 1 die Leerlaufspannung U₀ an den Ausgangsklemmen des Schweißgerätes bzw. der Polwechseleinrichtung eingestellt, um den sich nachfolgend einstellenden Kurzschluss zwischen Drahtelektrode und Schmelzbad zu detektieren, der durch den Kurzschlussstrom I_{K} angezeigt wird.

Nach dem Löschen des Lichtbogens am Ende der ersten Übergangsphase 6 wird zunächst keine elektrische Leistung im Schweißprozess umgesetzt, ferner ist der Lichtbogendruck ebenfalls identisch Null, sodass das an der Spitze des Drahtes befindliche angeschmolzene Material nicht verformt und somit ungestört in das Schweißbad übergehen kann. Darüber hinaus kommt es durch das Löschen des Lichtbogens schneller zum Tropfenkurzschluss im Vergleich zu einem Prozess, bei welchem der Lichtbogen vor der Einstellung des Kurzschlusses nicht gelöscht wird, da neben der fehlenden Tropfenverformung ferner kein weiteres Material am Drahtende angeschmolzen wird.

Die Zeitdauer tₐᵤₛ entsprechend der Summe der Zeitdauern beiden Phasen 7 und 1 ist insbesondere durch Verändern der Drahtgeschwindigkeit variabel und zeichnet sich dadurch aus, dass keine elektrische Leistung im Schweißprozess umgesetzt wird. Insofern lässt sich durch Variation der Zeitdauer der Phasen 1 und 7 der Wärmeeintrag nach Bedarf des jeweiligen Schweißprozesses spezifisch steuern, um beispielsweise eine stärkere Abkühlung durch Verlängerung der Phase 7 und/oder der Phase 1 zu erreichen.

Nach dem Erkennen des Kurzschlusses wird die Drahtförderrichtung umgekehrt, die Drahtgeschwindigkeit ändert ihr Vorzeichen zu Beginn der Phase 2 mit dem Erkennen des Kurzschlussstromes I_{K}. Dabei wird vorzugsweise in der Phase 2 auf einen niedrigen Strom geregelt, wobei dieser Strom jedoch so hoch geregelt werden kann, dass sich beim Aufreißen der Kurzschlussbrücke ein stabiler Lichtbogen ausbildet. Der Schweißdraht wird hier mit der negativen Geschwindigkeit -V3 zurückgezogen bis zu Beginn der Phase 3a, erkennbar an der erhöhten Schweißspannung UG, wenn der Kurzschluss aufgelöst ist und der Draht wiederum mit der Drahtgeschwindigkeit V1 in Richtung zum Schmelzbad bewegt wird. In der beschriebenen Ausführungsform wird das Zünden des Lichtbogens in der Teilphase 3a unterbunden, zu Beginn der Teilphase 3b erfolgt das Wiederzünden des Lichtbogens und die Abfolge der schon vorstehend beschriebenen Grundstromphasen und zugeordneten Impulsstromphasen. Figur 2 zeigt insofern eine Abfolge eines einzelnen Kurzlichtbogen-Zyklus mit einer Tropfenablöse zu Beginn der Phase 3a, wobei zu Beginn der Phase 3b der Strom auf einen bestimmten, vorgegebenen Wert geregelt werden kann, um in der zweiten Übergangsphase 3 einen Tropfen flüssigen Metalls anzuschmelzen.

Wie erläutert, erfolgt bei dem erfindungsgemäßen Verfahren zum Umschalten von der Impulslichtbogen-Betriebsphase hinein in die Kurzlichtbogen-Betriebsphase nach Ablauf der Übergangsphase 6 ein Ausschalten des Lichtbogens, der erst nach der Tropfenübergabe in der Kurzlichtbogen-Betriebsphase wieder startet. Demgegenüber erfolgt der Übergang von der Kurzlichtbogen-Betriebsphase in die Impulslichtbogen-Betriebsphase dadurch, dass nach der kurzschlussbehafteten Tropfenablöse zum Ende der Phase 2 in der Phase 3A der Lichtbogen wieder gestartet wird mit den Prozessparametern entsprechend der Grundstromphase der Impulslichtbogen-Betriebsphase. Die Phase 3 der Figur 2 nach dem Auflösen des Kurzschlusses stellt damit die Übergangsphase zur Impulslichtbogen-Betriebsphase dar, die hier als zweite Übergangsphase bezeichnet wird, wobei diese Phase länger oder kürzer als die anderen Grundphasen 5 des Impulsprozesses sein kann. In der in Figur 2 angegebenen Ausführungsform ist der Zeitdauer der Teilphase 3b als Teil der zweiten Übergangsphase 3 identisch zu der Zeitdauer der Grundstromphase 5 der Impulslichtbogen-Betriebsphase gesteuert.

In der Phase 3 bzw. 3B erfolgt vorzugsweise eine Stromregelung auf einen geringen Grundstrom IG mit dem Ziel, einen Tropfen flüssigen Metalls am Drahtende anzuschmelzen. Gemäß dem vorbeschriebenen erfolgt eine Drahtförderung in Richtung zum Schmelzbad, wobei eine Tropfenablösung in der Impulsphase 4 bei deutlich erhöhtem Pulsstrom IP erfolgt. Der Ablauf erfolgt in Phase 4 vorzugsweise auf der Grundlage einer Stromregelung, kann jedoch in einer anderen Ausführungsform auch spannungsgeregelt erfolgen.

Figur 2 zeigt darüber hinaus eine Variante des beschriebenen Verfahrens durch die gestrichelten Kurvenverläufe in der mit dem Bezugszeichen 6 versehenen ersten Übergangsphase für den Schweißstrom sowie die Schweißspannung und in den Phasen 2 ,3A für die Drahtgeschwindigkeit. Erkennbar wird in dieser Variante der Energieeintrag in der ersten Übergangsphase, welche der Löschphase umfassend die Teilphasen 7,1 zum Umschalten von der Impulslichtbogen-Betriebsphase in die Kurzlichtbogen-Betriebsphase vorgeht, erhöht. In der beschriebenen Ausführungsform erfolgt diese Erhöhung durch eine Stromregelung, ausgehend von den Werten UG, IG der Grundphase in der Art einer rampenförmigen Erhöhung bis zum zeitlichen Abschluss der ersten Übergangsphase. Diese Variante kann bei solchen Ausführungsformen zweckmäßig sein, bei welchen ein erhöhter Energieeintrag in die Drahtelektrode benötigt wird zum Anschmelzen des Material, welches in der nachfolgenden Kurzlichtbogen-Prozessphase bei der kurzschlussbehafteten Tropfenablöse an das Schmelzbad übergeben wird.

In der angegebenen Variante bezüglich der Drahtförderung ist vorgesehen, nach dem Erkennen des Kurzschlusses über den Zusammenbruch der Leerlaufspannung am Ende der Phase 1 die Drahtbewegung über einen kurzen weiteren Zeitraum 2A weiter zu bewegen, um einen ausgeprägten Tropfenübergang nach Auflösen des Kurzschlusses bereitzustellen. Unabhängig von dieser Vorgehensweise kann zusätzlich oder hiervon unabhängig auch vorgesehen sein, nach der Erfassung der Kurzschlussauflösung und demnach zum Tropfenübergang am Ende der Phase 2 den Draht weiter vom Werkstück zurückzuziehen, damit der Lichtbogen beim Wiederzünden zum Abschluss der Phase 3a eine vorgegebene Lichtbogenlänge aufweist.

Es sei darauf hingewiesen, dass in der mit Bezug auf Figur 2 beschriebenen Ausführungsform in der Impulslichtbogen-Betriebsphase auch mehr als vier Stromimpulse und zwischenliegenden Grundstromphasen vorgesehen sein können.

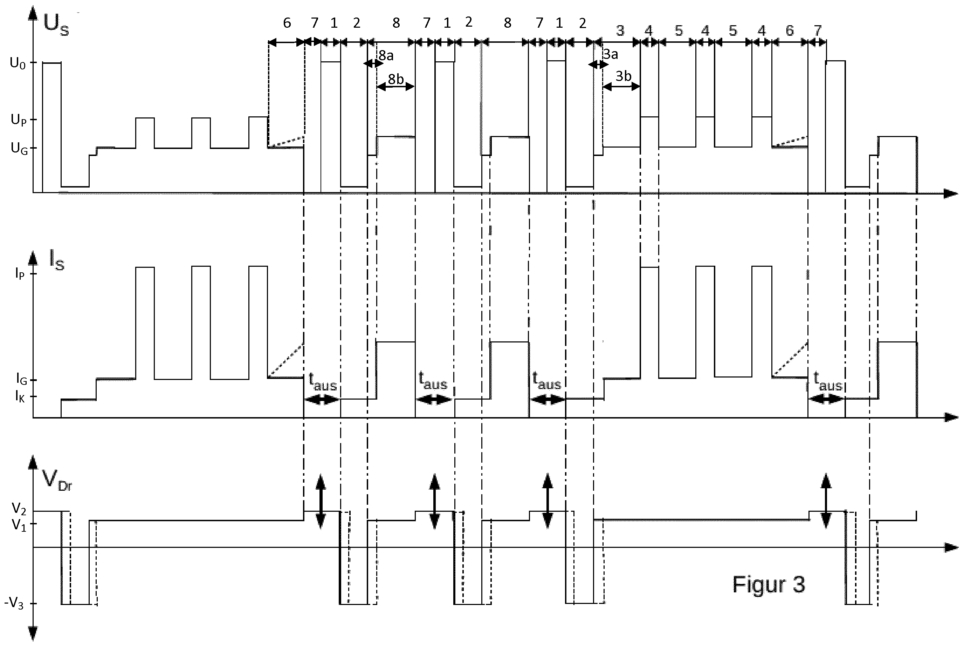

Figur 3 zeigt eine Variante des erfindungsgemäßen Verfahrens zum Schutzgas-Lichtbogenschweißen der Figur 2, bei welcher sich eine Impulslichtbogen-Schweißbetriebsphase, die hier drei statt vier Impulsstromphasen aufweist, mit einer Kurzlichtbogen-Schweißbetriebsphase abwechselt, die mehrere, hier drei Kurzlichtbogen-Prozesszyklen umfasst. Zur Figur 2 identische Phasen sind mit den gleichen Bezugszeichen versehen. Ausgehend von der Impulslichtbogen-Betriebsphase, die in dem in Figur 3 angegebenen Beispiel zunächst drei Perioden mit jeweils einer Impulsstromphase und einer Grundstromphase umfasst, schließt sich die schon mit Bezug auf Figur 2 erläuterte erste Übergangsphase 6 zum Umschalten von der Impulslichtbogen-Betriebsphase in die Kurzlichtbogen-Betriebsphase an. Dabei kann der Energieeintrag in die Drahtelektrode in der ersten Übergangsphase 6 identisch oder höher zu dem in der Grundstromphase der Impulslichtbogen-Betriebsphase sein, wobei der Draht in Richtung zum Schmelzbad gefördert wird. Nach Ablauf der ersten Übergangsphase 6 wird der Lichtbogen gelöscht, sodass in der nachfolgenden Phase 7 keine elektrische Leistung umgesetzt und damit kein Wärmeeintrag in das Werkstück bzw. den Draht erfolgt. Dies gilt auch für die der Phase 7 nachfolgenden Phase 1, in welcher eine Schweißleerlaufspannung U0 angelegt wird, um den Kontakt der Drahtelektrode mit dem Schmelzbad, d.h. den Kurzschluss zu detektieren. Die Gesamtzeitdauer taus setzt sich wieder aus den Zeitdauern der Teilphasen 7, 1 zusammen. Durch Steuern der Zeitdauer der beiden Phasen 7 und 1 bzw. Steuern der Drahtgeschwindigkeit VDr ist die Gesamtzeitdauer einstellbar, innerhalb welcher kein Energieeintrag erfolgt. Nach dem Eintritt des Kurzschlusses zum Ende der Phase 1 erfolgt in der Phase 2 vorzugsweise eine Stromregelung auf einen niedrigeren Kurzschlussstrom, um eine störungsfreie Tropfenablöse beim Auflösen der Kurzschlussbrücke bereitzustellen, wiederum wird der Draht je nach spezifischer Ausführungsform zu Beginn der Phase 2, d.h. mit dem Erkennen des Kurzschlusses oder kurzzeitig danach zurückgezogen. Wie obenstehend mit Bezug auf Fig. 2 schon erläutert, kann das Einsetzen der Rückwärtsbewegung des Drahtes zeitverzögert oder beispielsweise auch in Form einer Rampe erfolgen. Nach dem Auflösen des Kurzschlusses zum Ende der Phase 2 wird die Drahtförderrichtung umgekehrt (durchgezogene Linie) bzw. verzögert (gestrichelte Linien), wobei in der nachfolgenden Phase 8 ein Energieeintrag bei brennendem Lichtbogen erfolgt, sodass ein Anschmelzen von Material durchgeführt werden kann für den nachfolgenden Kurzschluss innerhalb der Kurzlichtbogen-Betriebsphase. In der beschriebenen Ausführungsform wird nach einer Verzögerung, entsprechend der Zeitdauer der Teilphase 8A über innerhalb der Teilphase 8B ein erhöhter Energieeintrag, vorzugsweise über eine Stromregelung in den Prozess eingeführt, um Drahtmaterial für die nachfolgende kurzschlussbehaftete Tropfenablöse bereitzustellen. In einer nicht dargestellten Ausführungsform kann auch vorgesehen sein, den erhöhten Energieeintrag beispielsweise mittels einer Stromsteuerung einzustellen, derart, dass sich der Strom in der Phase 8 rampenförmig erhöht, ähnlich wie es in Figur 3 als Alternative für die erste Übergangsphase 6 angegeben ist. Prinzipiell liegt es im Rahmen der Erfindung, den Energieeintrag in der ersten Übergangsphase 6 identisch zu gestalten, wie den Energieeintrag in der Phase 8 jeder Periode der Kurzlichtbogen-Betriebsphase. Nach Ablauf der Phase 8 schließt sich der in Figur 3 beschriebenen Ausführungsform die Löschphase mit den Teilphase 7,1 an, mit welcher die nächste Kurzlichtbogen-Periode der Kurzlichtbogen-Betriebsphase startet. Die Löschphase stellt in der Ausführungsform der Figur 3 eine Teilphase eines Kurzlichtbogenzyklus bzw. -Periode dar, die in jedem Zyklus bzw. Periode der Kurzlichtbogen-Betriebsphase umfasst ist. Nach Ablauf von drei Kurzlichtbogen-Perioden wird in dem in Figur 3 angegebenen Schweißprozess in der schon mit Bezug auf Figur 2 beschriebenen Weise in der zweiten Übergangsphase 3 auf die Impulslichtbogen-Betriebsphase umgeschaltet.

Bei dem in Figur 3 angegebenen erfindungsgemäßen Schweißverfahren kann die erste Übergangsphase 6 in Bezug auf die gesteuerten Schweißparameter identisch zu der Grundstromphase 5 durchgeführt werden und dieser damit entsprechen. In gleieher Weise kann die Übergangteilphase 3b oder die gesamte zweite Übergangsphase 3 dieser Grundstromphase 5 entsprechen.

Das wechselweise Umschaltung zwischen beiden Betriebsphasen kann innerhalb eines erfindungsgemäß gesteuerten Schweißprozesses bis zum Abschluss des Schweißvorganges erfolgen, wobei es auch im Rahmen der Erfindung liegt, die Anzahl der jeweiligen Perioden bzw. Zyklen innerhalb der Impulslichtbogen-Betriebsphase und/oder der Kurzlichtbogen-Betriebsphasen zu variieren.

Wie schon mit Bezug auf Figur 2 erläutert und in Figur 3 auch durch einen vertikalen Pfeil angedeutet, kann die Drahtgeschwindigkeit VDr verändert werden um die Zeitdauer tₐᵤₛ, in welcher kein Lichtbogen brennt und der Strom IS identisch Null ist, zu variieren, sodass der Schweißprozess beispielsweise durch Verlängern der Zeit tₐᵤₛ mit einem geringeren Wärmeeintrag bzw. einer verlängerten Abkühlphase durchgeführt werden kann. In ähnlicher Weise kann der Gesamtprozess durch das Erhöhen der Anzahl der Zyklen bzw. Perioden in der Kurzschluss-Betriebsphase und/oder Erniedrigen der Impulsperioden innerhalb der Impulslichtbogen-Betriebsphase bzw. das Verhältnis derselben kühler eingerichtet werden. Im Gegensatz dazu kann stärker Wärme in den Prozess eingeführt werden, wenn die Anzahl der Perioden innerhalb der Impulslichtbogen-Betriebsphase bzw. gegenüber der Anzahl der Kurzlichtbogen-Zyklen innerhalb der Kurzlichtbogen-Betriebsphase erhöht wird.

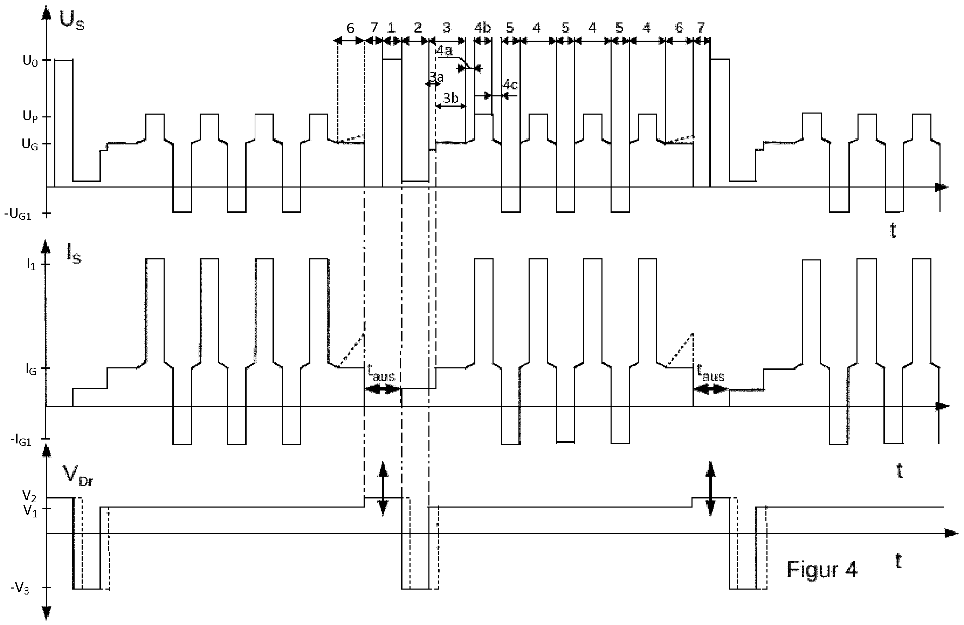

Figur 4 zeigt eine weitere Ausführungsform eines erfindungsgemäßen Verfahrens zum Schutzgas-Lichtbogenschweißen, bei welchem sich alternierend Kurzlichtbogen-Betriebsphasen und Impulslichtbogen-Betriebsphasen abwechseln. Der in Figur 4 angegebene erfindungsgemäße Schweißprozess unterscheidet sich von dem der Figur 2 dadurch, dass in der Impulsbetriebsphase die Drahtelektrode zu Beginn der Grundstromphase 5 nach negativ umgepolt und am Ende dieser Phase zur Einleitung bzw. zu Beginn der Impulsstromphase wieder nach positiv gepolt wird. Der Impulslichtbogen-Prozess ist insofern als Wechselstromprozess ausgebildet, wobei sich die Pulsphasen 4 in der beschriebenen Ausführungsform aus mehreren Abschnitten zusammensetzen. Die Pulsphase 4 beginnt mit der Phase 4A mit einem Anstieg geringer Steigung von Schweißstrom und Schweißspannung. Der eigentliche Strompuls zur Ablösung des Tropfens von Schweißdraht erfolgt in, oder am Ende der Stromsprungphase 4B, an die sich eine Phase 4C mit einem schwächeren Abfall anschließt.

Das Umschalten von der Impulslichtbogen-Betriebsphase in die Kurzlichtbogen-Betriebsphase verläuft bei der in Figur 4 angegebenen Ausführungsform identisch zu der in Figur 2 dargestellten. Nach Ablauf der Impulsstromphase wird bei in Richtung zum Schmelzbad bewegter Drahtelektrode eine erste Übergangsphase eingestellt mit brennendem Lichtbogen, vorzugsweise mit einem zur Grundstromphase erhöhten Energieeintrag, wobei nach Ablauf dieser ersten Übergangsphase 6 der Lichtbogen gelöscht wird, innerhalb der Zeitdauer tₐᵤₛ in den Phasen 7, 1. Der Übergang von der Kurzlichtbogen-Betriebsphase, die in dem in Figur 4 angegebenen Prozess nur eine einzelne Periode umfasst, in die Impulslichtbogen-Betriebsphase erfolgt wiederum über die zweite Übergangsphase 3a bzw. 3b, die sich nach dem Tropfenübergang und der Auflösung des Kurzschlusses durch das Zurückziehen der Drahtelektrode an die Phase 2 anschließt. Auch dieser Übergang unterscheidet sich nicht zu dem Ablauf eines Schweißprozesses gemäß Figur 2.

In der Ausführungsform eines erfindungsgemäßen Schweißverfahrens gemäß Figur 4 erfolgen die beschriebenen Polwechsel in die Grundstromphasen der Impulslichtbogen-Betriebsphase bei beabstandeter Drahtelektrode zum Schmelzbad. Um ein Wiederzünden des Lichtbogens beim Eintritt in die Grundstromphasen bzw. von der Grundstromphasen in die Strompulsphase sicherzustellen, kann je nach Ausführungsform eine Zündhilfe Verwendung finden, beispielsweise durch vorhergehendes Kurzschließen des Ausgangs der Stromquelle, wie es in der Patentschrift DE 102 45 368 B4 beschrieben ist.

Auch die Polung des Drahtes nach negativ in den Grundstromphasen der Impulslichtbogen-Betriebsphase kann die Flexibilität im Hinblick auf die Einstellung des Wärmeeintrags in die Drahtelektrode bzw. das Werkstück weiter erhöhen. Bei positiver Polung der Drahtelektrode setzt der Lichtbogen am Ende des Drahtes an, sodass vergleichsweise wenig Energie in das freie Drahtende eingespeist wird. Stattdessen wird der überwiegende Teil der Lichtbogenenergie in das jeweilige Werkstück eingeleitet. Bei negativer Polung des Drahtes liegt der Lichtbogenansatzpunkt oberhalb des freien Drahtendes und umgreift das Drahtende insofern mit einer vergleichsweise großen Ansatzfläche. Hierdurch wird mehr Wärme in das Drahtende eingekoppelt, sodass der Draht in der Grundstromphase stärker vorgewärmt und damit die Anschmelzleistung merklich erhöht werden kann. Da gleichzeitig weniger Energie in das Werkstück eingeleitet wird, ist die thermische Belastung des Werkstückes erniedrigt.

Es sei darauf hingewiesen, dass in der in Figur 4 angegebenen Ausführungsform die erste Übergangsphase 6 zum Umschalten von der Impulslichtbogen-Betriebsphase in die Kurzlichtbogen-Betriebsphase nach Ablauf der Impulsstromphase eine positiv gepolte Drahtelektrode umfasst, die sich damit bezüglich der Polarität des Drahtes von der der Grundstromphasen unterscheidet. Gleiches gilt für die zweite Übergangsphase 3 zur Umschaltung der Kurzlichtbogen-Betriebsphase in die Impulslichtbogen-Betriebsphase, während welcher der Draht auch positiv gepolt ist, d.h. der erste Stromimpuls in der Impulslichtbogen-Betriebsphase wird beim Übergang von einer positiven Grundstromphase eingeleitet bzw. geht dieser vor.

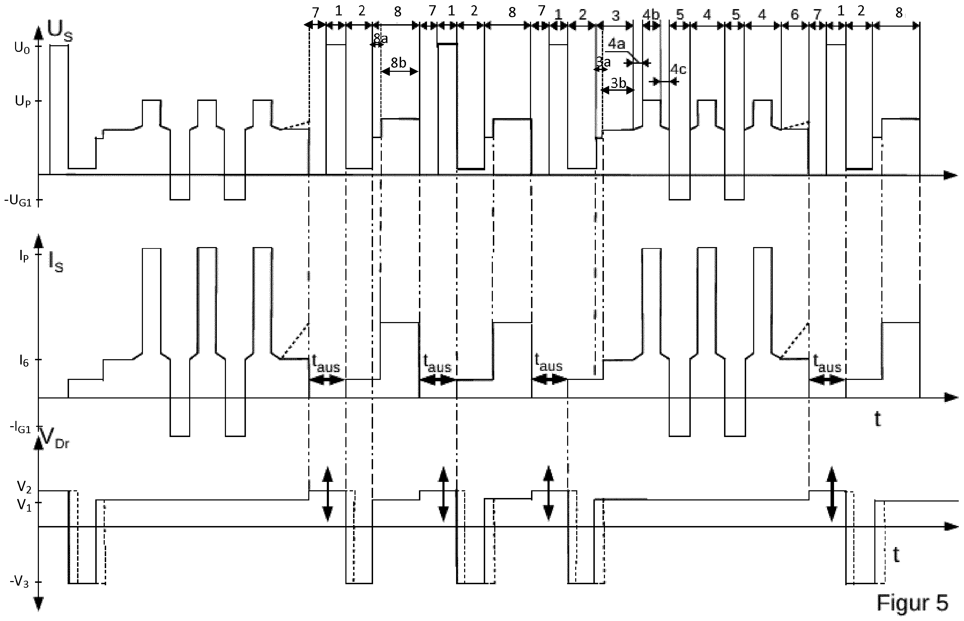

Die in Figur 5 abgewandelte Variante eines erfindungsgemäßen Schutzgaslichtbogen-Schweißverfahrens unterscheidet sich von der gemäß Figur 4 allein dadurch, dass die Kurzlichtbogen-Betriebsphase mehrere Kurzlichtbogen-Zyklen bzw. Perioden aufweist, in welchen jeweils nach Ausbildung des Kontaktes der Drahtelektrode mit dem Schmelzbad die Drahtförderung zur Tropfenablösung umgekehrt wird unter Wiederzünden des Lichtbogens bis eine vorgegebene Lichtbogenlänge oder Lichtbogenspannung erreicht wird und anschließend bei Aufrechterhaltung des Lichtbogens die Drahtförderung wieder umgekehrt wird. Wie aus Figur 5 hervorgeht, weist jede Kurzlichtbogen-Periode in dieser Ausführungsform eine Löschphase 7 auf, in welcher der Lichtbogen entweder nach Ablauf der ersten Übergangsphase 6 oder nach Ablauf einer Phase 8 gelöscht wird, in der ein erhöhter Energieeintrag in den Draht, insbesondere durch Regeln des Schweißstromes zum Anschmelzen desselben durchgeführt wird, wobei sich der Draht in diesen Phasen 6 bzw. 8 in Richtung zum Schmelzbad bewegt. Die in allen Figuren angegebenen gestrichelten Verläufen stellen wiederum optionale Verläufe bereit, wie sie insbesondere mit Bezug auf Figur 2 beschrieben wurden. Dies betrifft auch die Einstellung der Zeitdauer in den Phasen 1, 7 über die Variation der Drahtgeschwindigkeit zum genauen Einstellen des Wärmeeintrages in den Prozess, wobei die Varianten der Figuren 4, 5 durch die Verwendung eines Wechselstrom-Impulslichtbogen-prozesses eine weitere Möglichkeit zur Steuerung des Wärmeeintrags in den Prozess bereitstellt.

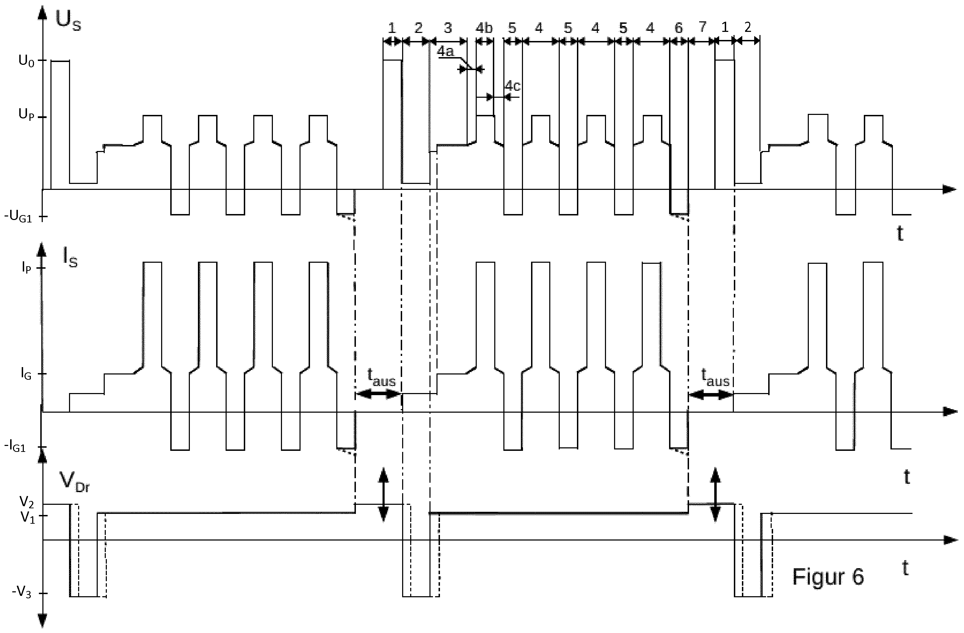

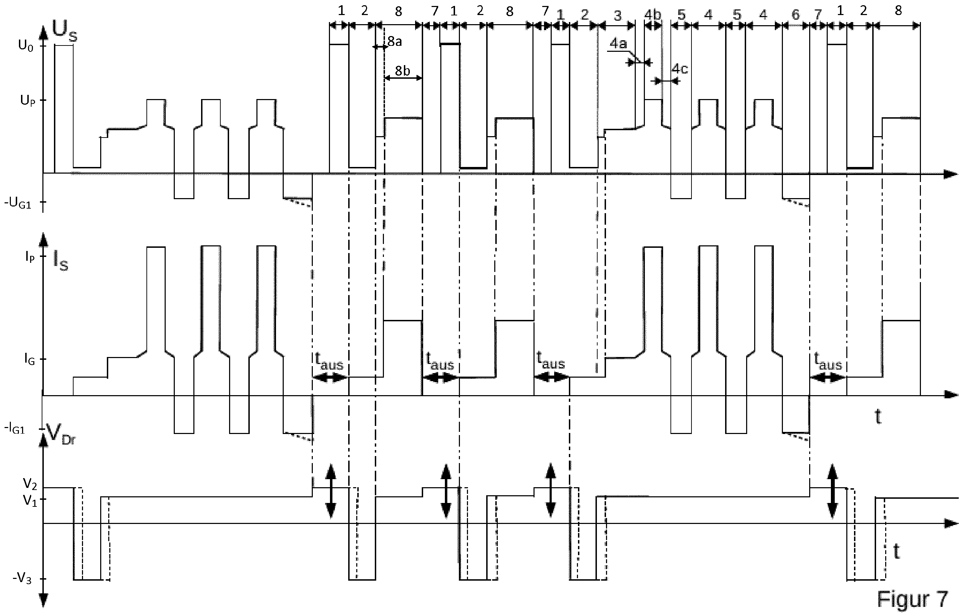

Mit Bezug auf die Figuren 6 und 7 wird eine weitere Ausführungsform sowie eine diesbezügliche Variante eines erfindungsgemäßen Verfahrens zum Schutzgaslichtbogenschweißen erläutert, die sich in Bezug auf die Varianten der Figuren 4 und 5 allein durch die erste Übergangsphase 6 unterscheiden, welche genutzt wird, um von der Impulslichtbogen-Betriebsphase in die Kurzlichtbogen-Betriebsphase umzuschalten. In dieser ersten Übergangsphase 6 ist die Drahtelektrode in den Ausführungsformen der Figuren 6, 7 negativ gepolt in der gleichen Weise wie die Grundstromphase der Impulslichtbogen-Betriebsphase. Insofern wird bei diesen Varianten der mit negativer Drahtelektrode brennende Lichtbogen am Ende der Übergangsphase 6 bzw. zu Beginn der Phase 7 ausgeschaltet, sodass der in Phase 1 auftretende Polwechsel stromlos erfolgen kann. Die Einstellung des Kurzschlusses am Ende der Phase 1 wird erfasst, der Draht zurückgezogen, sodass dann am Ende der Phase 2 bzw. zu Beginn der Phase 3 eine Tropfenablöse bewirkt wird und ein Lichtbogen mit positiv gepolter Drahtelektrode zündet. Der in Figur 7 skizzierte Schweißprozess unterscheidet sich von dem der Figur 6 allein dadurch, dass die Kurzschluss-Betriebsphase nicht einen einzelnen, sondern drei aufeinanderfolgende Kurzlichtbogen-Perioden umfasst, die sich - bis auf die erste Übergangsphase 6, nicht von dem Prozess der Figur 5 unterscheidet.

### Bezugszeichenliste

- 1: Leerlaufphase
- 2: Drahtrückziehphase
- 3: Zweite Übergangsphase
- 4: Pulsstromphase/ Impulsstromphase
- 5: Grundstromphase
- 6: Erste Übergangsphase
- 8: Anschmelzphase
- 100: Schweißgerät
- 101: Drehstromnetz
- 102: Schweißstromquelle
- 103: Steuereinrichtung
- 104: Polwechseleinrichtung
- 105: Drahtfördereinrichtung/Drahtvorschubeinrichtung
- 106: Drahtpuffer
- 107: Brenner
- 108: Dichtbohrung
- 109: Werkstück
- 110: Drahtfördereinrichtung/Drahtvorschubeinrichtung
- 111: Schweißdraht/Drahtelektrode
- I_{S}: Schweißstrom
- I_{G}: Grundstrom
- I_{K}: Kurzschlussstrom
- Ip: Pulsstrom
- tₐᵤₛ: Zeitdauer mit gelöschtem Lichtbogen/Löschphase
- U_{S}: Schweißspannung
- U₀: Leerlaufspannung
- U_{G}: Schweißspannung in der Grundstromphase
- U_{P}: Pulsspannung
- V_{Dr}: Drahtfördergeschwindigkeit

## Patentansprüche

1. Verfahren zum Schutzgas-Lichtbogenschweißen mit abschmelzender Elektrode, bei welchem Elektrodenmaterial an ein Schmelzbad übergeben wird, und in einer Impulslichtbogen-Betriebsphase, umfassend eine Grundstromphase (5) und eine Impulsstromphase (4), eine Tropfenablöse erfolgt, wenn die Elektrode vom Schmelzbad beabstandet ist, und in einer Kurzlichtbogen-Betriebsphase eine kurzschlussbehaftete Tropfenablöse erfolgt, wobei zwischen Impulslichtbogen-Betriebsphase und Kurzlichtbogen-Betriebsphase wechselweise umgeschaltet wird, und sowohl in der Grundstromphase (5) als auch in der Impulsstromphase (4) der Impulslichtbogen-Betriebsphase die Elektrode in Richtung zum Schmelzbad und in der Kurzlichtbogen- Betriebsphase der Draht (111) wechselweise in Richtung zum und weg vom Schmelzbad gefördert wird, **dadurch gekennzeichnet, dass** zum Umschalten von der Impulslichtbogen-Betriebsphase in die Kurzlichtbogen-Betriebsphase nach Ablauf der Impulsstromphase eine erste Übergangphase (6) mit vorzugsweise zur Grundstromphase (5) erhöhtem Energieeintrag in die Drahtelektrode über eine erste vorbestimmte Zeitdauer erfolgt, an die sich eine Löschphase (tₐᵤₛ) anschließt, in welcher zunächst der Lichtbogen gelöscht wird, während die Drahtelektrode (111) in Richtung zum Schmelzbad bewegt wird, und die Drahtelektrode bei gelöschtem Lichtbogen bis zum Kontakt mit dem Schmelzbad gefördert wird.

2. Verfahren nach Anspruch 1, **dadurch gekennzeichnet, dass** nach Ausbildung des Kontaktes der Drahtelektrode (111) mit dem Schmelzbad in der Kurzlichtbogen-Betriebsphase die Drahtförderung zur Tropfenablöse umgekehrt wird unter Wiederzünden des Lichtbogens bis ein vorgegebener Prozessparameter wie Lichtbogenlänge bzw. Lichtbogenspannung erreicht wird und anschließend bei Aufrechterhaltung des Lichtbogens die Drahtförderung wieder umgekehrt wird.

3. Verfahren nach Anspruch 2, **dadurch gekennzeichnet, dass** sich zum Umschalten von der Kurzlichtbogen-Betriebsphase in die Impulslichtbogen-Betriebsphase nach der Drahtförderumkehrung zur Förderung des Drahtes in Richtung Schmelzbad eine zweite Übergangsphase (3) anschließt mit zur Grundstromphase (5) zumindest gleichem, insbesondere erhöhtem Energieeintrag in die Drahtelektrode (111) über eine zweite vorbestimmte Zeitdauer, an die sich die Impulslichtbogen-Betriebsphase anschließt.

4. Verfahren nach Anspruch 2 oder 3, **dadurch gekennzeichnet, dass** in jeder Periode der Kurzlichtbogen-Betriebsphase nach der Drahtförderumkehrung zur Förderung des Drahtes in Richtung Schmelzbad der Lichtbogen gelöscht wird und die Drahtelektrode (111) bei gelöschtem Lichtbogen bis zum Kontakt (Kurzschluss) mit dem Schmelzbad gefördert wird.

5. Verfahren nach Anspruch 2 oder 4, **dadurch gekennzeichnet**, **dassin** der Kurzlichtbogen-Betriebsphase im Anschluss an die Drahtförderumkehrung zur Förderung des Drahtes in Richtung Schmelzbad und vor dem Löschen des Lichtbogens ein erhöhter Energieeintrag in die Drahtelektrode (111) bei Plus-gepolter Drahtelektrode erfolgt.

6. Verfahren nach Anspruch 5, **dadurch gekennzeichnet, dass** der erhöhte Energieeintrag in der Kurzlichtbogen- Betriebsphase durch einen Konstantstrom erzeugt wird, welcher im Anschluss an die Drahtförderumkehrung zur Förderung des Drahtes in Richtung Schmelzbad und ggf. unter Vorsehen einer Totzeit und vor dem Löschen des Lichtbogens über einen Zeitraum eingestellt wird.

7. Verfahren nach einem der Ansprüche 1 bis 6, **dadurch gekennzeichnet, dass** in der Impulslichtbogen-Betriebsphase die Drahtelektrode (111) in deren Grundstromphase (5) negativ und in deren Impulsstromphase (4) positiv gepolt ist.

8. Verfahren nach Anspruch 7, **dadurch gekennzeichnet, dass** in der ersten Übergangsphase (6) die Drahtelektrode (111) positiv gepolt ist.

9. Verfahren nach einem der Ansprüche 1 bis 8, **dadurch gekennzeichnet, dass** in der ersten Übergangsphase (6) der Schweißstrom I_{S} betragsmäßig kontinuierlich, insbesondere in Form einer Rampe erhöht wird.

10. Verfahren nach einem der Ansprüche 1 bis 9, **dadurch gekennzeichnet, dass** nach dem Löschen des Lichtbogens die Drahtelektrode (111) bis zum Kontakt mit dem Schmelzbad mit einer Geschwindigkeit (V_{Dr}) gefördert wird, die größer ist als die Fördergeschwindigkeit in der Impulslichtbogen-Betriebsphase.

11. Verfahren nach einem der Ansprüche 1 bis 10, **dadurch gekennzeichnet, dass** in der Kurzlichtbogen-Betriebsphase im Anschluss auf das Löschen des Lichtbogens nach einer vorgegebenen Zeitdauer und vor Erreichen eines Kontaktes der Drahtelektrode (111) mit dem Schweißbad eine vorgegebene Schweißleerlaufspannung (U₀) eingestellt wird.

12. Vorrichtung zum Schutzgas-Lichtbogenschweißen mit abschmelzender Drahtelektrode (111), mit einer den Schweißprozess speisenden Stromquelle (102), einer Steuerung sowie einer Drahtfördereinrichtung (105), welche beide derart gesteuert sind, dass in einer Impulslichtbogen-Betriebsphase, umfassend eine Grundstromphase (5) und eine Impulsstromphase (4), eine Tropfenablöse erfolgt, wenn die Elektrode vom Schmelzbad beabstandet ist und in einer Kurzlichtbogen-Betriebsphase eine kurzschlussbehaftete Tropfenablöse erfolgt, wobei zwischen Impulslichtbogen-Betriebsphase und Kurzlichtbogen-Betriebsphase wechselweise umgeschaltet wird, und sowohl in der Grundstromphase (5) als auch in der Impulsstromphase (4) der Impulslichtbogen-Betriebsphase die Drahtelektrode (111) in Richtung zum Schmelzbad und in der Kurzlichtbogen-Betriebsphase der Draht wechselweise in Richtung zum und weg vom Schmelzbad gefördert wird, **dadurch gekennzeichnet, dass** die Steuereinrichtung eingerichtet ist, die Stromquelle (102) und die Drahtfördereinrichtung (105) so zu steuern, dass zum Umschalten von der Impulslichtbogen-Betriebsphase in die Kurzlichtbogen-Betriebsphase nach Ablauf der Impulsstromphase (4) eine erste Übergangphase (6) mit vorzugsweise zur Grund-stromphase (5) erhöhtem Energieeintrag in die Drahtelektrode (111) über eine erste vorbestimmte Zeitdauer erfolgt, an die sich eine Löschphase (tₐᵤₛ) anschließt, in welcher zunächst der Lichtbogen gelöscht wird, während die Drahtelektrode (111) in Richtung zum Schmelzbad bewegt wird, und die Drahtelektrode (111) bei gelöschtem Lichtbogen bis zum Kontakt mit dem Schmelzbad gefördert wird.

## Claims

1. Method for shielding gas arc welding with a consumable electrode for which electrode material is transferred to a molten bath and a droplet detachment takes place in a pulse arc operating phase comprising a base current phase (5) and a pulse current phase (4), when the electrode is spaced from the molten bath and a short circuiting droplet detachment, wherein a pulse arc operating phase is alternately switched with a short arc operating phase, and the electrode is conveyed in direction of the molten bath in the base current phase (5) as well as in the pulse current phase (4) of the pulse arc operating phase and the wire (111) is alternately conveyed to and fro the molten bath in the short arc operating phase, **characterized in that** a first transition phase (6) with a preferably increased energy input into the wire electrode with respect to the base current phase (5) takes place over a first predetermined duration for switching from the pulse arc operating phase to the short arc operating phase after termination of the pulse current phase, wherein this transition phase is followed by an extinction phase (tₐᵤₛ) in which the arc is first extinguished while the wire electrode (111) is moved in direction of the molten bath and, the arc being extinguished, the wire electrode is conveyed until it contacts the molten bath.

2. Method according to claim 1, **characterized in that**, after the contact of the wire electrode (111) with the molten bath has been established in the short arc operating phase, the wire feed to the droplet detachment is reversed by the reignition of the arc until a predetermined process parameter such as the arc length or the arc tension is reached and, the arc being maintained, the wire feed is then reversed again.

3. Method according to claim 2, **characterized in that** a second transition phase (3) follows for switching from the short arc operating phase to the pulse arc operating phase, after the wire feed reversal for conveying the wire in direction of the molten bath, with at least the same, in particular an increased energy input into the wire electrode (111) with respect to the base current phase (5) over a second predetermined duration, that is followed by the pulse arc operating phase.

4. Method according to claim 2 or 3, **characterized in that** the arc is extinguished in each period of the short arc operating phase after the wire feed reversal in direction of the molten bath and the wire electrode (11) is conveyed, the arc being extinguished, until it contacts (short circuit) the molten bath.

5. Method according to claim 2 or 4, **characterized in that** an increased energy input into the wire electrode (111) takes place in the short arc operating phase following the wire feed reversal for conveying the wire in direction of the molten bath and before the arc is extinguished, the wire electrode being positive.

6. Method according to claim 5, **characterized in that** the increased energy input in the short arc operating phase is generated by a constant current that is set over a time period after the wire feed reversal for conveying the wire in direction of the molten bath and, if necessary, by providing a dead time and before the extinction of the arc.

7. Method according to one of the claims 1 to 6, **characterized in that** the wire electrode (111) is negative in the pulse arc operating phase in its base current phase (5) and is positive in its pulse current phase (4).

8. Method according to claim 7, **characterized in that** the wire electrode (111) is positive in the first transition phase (6).

9. Method according to one of the claims 1 to 8, **characterized in that** the welding current I_{S} is quantitatively increased in the first transition phase (6), in particular as a ramp.

10. Method according to one of the claims 1 to 9, **characterized in that**, after the extinction of the arc, the wire electrode (111) is conveyed until it contacts the molten bath with a speed (V_{DR}) that is higher than the conveying speed in the pulse arc operating phase.

11. Method according to one of the claims 1 to 10, **characterized in that** a predetermined no-load welding voltage (Uₒ) is adjusted in the short arc operating phase after the extinction of the arc after a predetermined duration and before the wire electrode (111) contacts the molten bath.

12. Device for shielding gas arc welding with a consumable wire electrode (111) with a current source (102) feeding the welding process, a control as well as a wire conveying device (105) that are both controlled in such a manner that a droplet detachment takes place in a pulse arc operating phase comprising a base current phase (5) and a pulse current phase (4), when the electrode is spaced from the molten bath, and a short circuiting droplet detachment in a short arc operating phase, wherein a pulse arc operating phase is alternately switched with a short arc operating phase, and the wire electrode (111) is conveyed in direction of the molten bath in the base current phase (5) as well as in the pulse current phase (4) of the pulse arc operating phase and the wire is alternately conveyed to and fro the molten bath in the short arc operating phase, **characterized in that** the control device is designed to control the current source (102) and the wire conveying device (105) in such a manner that a first transition phase (6) with a preferably increased energy input into the wire electrode (111) with respect to the base current phase (5) takes place over a first predetermined duration for switching from the pulse arc operating phase to the short arc operating phase after termination of the pulse current phase (4), wherein this transition phase is followed by an extinction phase (tₐᵤₛ) in which the arc is first extinguished while the wire electrode (111) is moved in direction of the molten bath and, the arc being extinguished, the wire electrode (111) is conveyed until it contacts the molten bath.

## Revendications

1. Procédé de soudage à l'arc sous gaz protecteur avec électrode fusible pour lequel le matériau de l'électrode est transféré à un bain de fusion et un dépôt de gouttes étant effectué dans une phase de fonctionnement à arc pulsé comprenant une phase de courant de base (5) et une phase de courant pulsé (4) lorsque l'électrode est espacée du bain de fusion et un dépôt de gouttes avec court-circuit étant effectué dans une phase de fonctionnement à arc court, cependant qu'il y a une commutation alternée entre la phase de fonctionnement à arc pulsé et la phase de fonctionnement à arc court et qu'aussi bien dans la phase de courant de base (5) que dans la phase de courant pulsé (4) de la phase de fonctionnement à arc pulsé l'électrode est acheminée en direction du bain de fusion et que dans la phase de fonctionnement à arc court le fil (11) est acheminé en va-et-vient à partir du bain de fusion, **caractérisé en ce que** pour la commutation de la phase de fonctionnement à arc pulsé à la phase de fonctionnement à arc court après expiration de la phase de courant pulsé une première phase de transition (6) avec de préférence un apport d'énergie accru par rapport à la phase de courant de base (5) est effectuée dans le fil électrode pendant une première duré prédéterminée suivie par une phase d'extinction (tₐᵤₛ) dans laquelle tout d'abord l'arc est éteint tandis que le fil électrode (11) est déplacé en direction du bain de fusion et le fil électrode est acheminé, l'arc électrique étant éteint, jusqu'au contact avec le bain de fusion.

2. Procédé selon la revendication 1, **caractérisé en ce que**, après formation du contact du fil électrode (111) avec le bain de fusion dans la phase de fonctionnement à arc court, l'avance du fil vers le dépôt de gouttes est inversé en réallumant l'arc jusqu'à ce qu'un paramètre de processus prédéterminé comme la longueur de l'arc ou la tension de l'arc soit atteint et ensuite, lors du maintien de l'arc, l'avance du fil est à nouveau inversée.

3. Procédé selon la revendication 2, **caractérisé en ce que**, pour la commutation de la phase de fonctionnement à arc court à la phase de fonctionnement à arc pulsé, après l'inversion de l'avance du fil pour l'acheminement du fil en direction du bain de fusion, il y a une seconde phase de transition (3) avec au moins le même apport d'énergie, en particulier accru, dans le fil électrode (111) par rapport à la phase de courant de base (5) pendant une seconde durée de temps prédéterminée, phase qui est suivie par la phase de fonctionnement à arc pulsé.

4. Procédé selon la revendication 2 ou 3, **caractérisé en ce que** l'arc est éteint dans chaque période de la phase de fonctionnement à arc court après l'inversion de l'avance du fil pour l'acheminement du fil en direction du bain de fusion et le fil électrode (111) est acheminé une fois l'arc éteint jusqu'au contact (court-circuit) avec le bain de fusion.

5. Procédé selon la revendication 2 ou 4, **caractérisé en ce que**, dans la phase de fonctionnement à arc court après l'inversion de l'avance du fil pour l'acheminement du fil en direction du bain de fusion et avant l'extinction de l'arc un apport d'énergie accru dans le fil électrode (111) est effectué, le fil électrode étant polarisé positif.

6. Procédé selon la revendication 5, **caractérisé en ce que** le second apport d'énergie accru dans la phase de fonctionnement à arc court est produit par un courant constant qui est réglé après l'inversion de l'avance du fil pour l'acheminement du fil en direction du bain de fusion et le cas échéant en prévoyant un temps mort et avant l'extinction de l'arc pendant un laps de temps.

7. Procédé selon l'une des revendications 1 à 6, **caractérisé en ce que** dans la phase de fonctionnement à arc pulsé le fil électrode (111) est polarisé négatif dans sa phase de courant de base de celle-ci et positif dans sa phase de courant pulsé.

8. Procédé selon la revendication 7, **caractérisé en ce que** le fil électrode (111) est polarisé positif dans la première phase de transition (6).

9. Procédé selon l'une des revendications 1 à 8, **caractérisé en ce que** dans la première phase de transition (6) le courant de soudage I_{S} est augmenté quantitativement de manière continue, en particulier sous forme de rampe.

10. Procédé selon l'une des revendications 1 à 9, **caractérisé en ce qu'**après extinction de l'arc le fil électrode (111) est acheminé jusqu'au contact avec le bain de fusion avec une vitesse (V_{DR}) qui est supérieure à la vitesse d'acheminement dans la phase de fonctionnement à arc pulsé.

11. Procédé selon l'une des revendications 1 à 10, **caractérisé en ce que**, dans la phase de fonctionnement à arc court après l'extinction de l'arc, une tension à vide de soudage (Uₒ) est réglée après une durée de temps prédéterminée et avant d'atteindre un contact du fil électrode (111) avec le bain de fusion.

12. Dispositif de soudage à l'arc sous gaz protecteur avec électrode fusible (111) avec une source de courant (102) qui alimente le processus de soudage, une commande ainsi qu'un dispositif d'acheminement du fil (105) qui sont tous deux commandés de telle manière que, dans une phase de fonctionnement à arc pulsé comprenant une phase de courant de base (5) et une phase de courant pulsé (4), un dépôt de gouttes est effectué lorsque l'électrode est espacée du bain de fusion et un dépôt de gouttes avec court-circuit est effectué dans une phase de fonctionnement à arc court, cependant qu'il y a une commutation alternée entre la phase de fonctionnement à arc pulsé et la phase de fonctionnement à arc court et qu'aussi bien dans la phase de courant de base (5) que dans la phase de courant pulsé (4) de la phase de fonctionnement à arc pulsé l'électrode est acheminée en direction du bain de fusion et que dans la phase de fonctionnement à arc court le fil (11) est acheminée en va-et-vient à partir du bain de fusion, **caractérisé en ce que** le dispositif de commande est conçu pour commander la source de courant (102) et le dispositif d'acheminement du fil (105) de telle manière que, pour la commutation de la phase de fonctionnement à arc pulsé à la phase de fonctionnement à arc court après expiration de la phase de courant pulsé (4), une première phase de transition (6) avec de préférence un apport d'énergie accru par rapport à la phase de courant de base (5) est effectuée dans le fil électrode (111) pendant une première durée prédéterminée, suivie par une phase d'extinction (tₐᵤₛ) dans laquelle tout d'abord l'arc est éteint pendant que le fil électrode (11) est déplacé en direction du bain de fusion et le fil électrode est acheminé, l'arc électrique étant éteint, jusqu'au contact avec le bain de fusion.
